# NOUVEAU FASCICULE DE BREVET EUROPEEN

(11) **EP 2 901 527 B3**
(45) Date de publication du présent fascicule: **26.08.2026**
(45) Mention de la délivrance du brevet: 17.05.2017
(21) Numéro de dépôt: 13785501.1
(22) Date de dépôt: 27.09.2013
(51) Int. Cl.: H01R 39/38, H01R 39/415, H01R 39/36, H02K 5/14, H02K 13/00

(54) **BALAI DE MACHINE ELECTRIQUE ET PORTE-BALAIS CORRESPONDANT**
BÜRSTE EINER ELEKTRISCHEN MASCHINE SOWIE ZUGEHÖRIGER BÜRSTENHALTER
BRUSH OF AN ELECTRIC MACHINE AND CORRESPONDING BRUSH-HOLDER

(30) Priorité: 28.09.2012 FR 1259184
(43) Date de publication de la demande: 05.08.2015
(73) Titulaire: Valeo Electrification, 95800 Cergy (FR)
(72) Inventeur: GENTIL, Maximilien, F-69960 Corbas (FR); SALTEL, Alexandre, F-74600 Seynod (FR)
(74) Mandataire: Cardon, Nicolas
(86) Numéro de dépôt international: PCT/FR2013/052294
(87) Numéro de publication internationale: WO 2014/049289

(56) Documents cités:
- US-A- 6 031 313
- US-A1- 2003 230 951
- US-A1- 2005 162 035
- US-A1- 2007 241 631
- US-A1- 2008 084 132

## Description

### DOMAINE TECHNIQUE DE L'INVENTION

L'invention porte sur un balai de machine électrique ainsi que sur le porte-balais correspondant.

L'invention trouve une application particulièrement avantageuse, mais non exclusive avec les machines électriques utilisées dans les démarreurs de véhicule automobile. En particulier, l'invention est mise en oeuvre avec les démarreurs utilisés avec les véhicules équipés de la fonction d'arrêt et de redémarrage du moteur thermique (fonction dite « stop and start » en anglais) suivant laquelle le moteur thermique du véhicule est arrêté en raison des conditions de circulation (notamment lors d'un arrêt au feu rouge) et redémarré ensuite afin de faire des économies de carburant.

### ETAT DE LA TECHNIQUE

Afin de démarrer un moteur thermique notamment d'un véhicule automobile, il est connu d'utiliser une machine électrique tournante sous la forme d'un démarreur pourvu d'un lanceur capable de transmettre une énergie de rotation du démarreur à un vilebrequin du moteur thermique par l'intermédiaire d'une couronne d'entraînement.

Ce lanceur déplacé par un levier relié à une tige mobile d'un contacteur est monté sur un arbre de sortie de la machine électrique, le cas échéant par l'intermédiaire d'un réducteur de vitesse.

La machine électrique est munie d'un stator, ou inducteur, constitué d'une culasse et d'une structure aimantée à plusieurs aimants permanents réalisés généralement en ferrite. La machine comporte également un rotor, ou induit, comprenant des conducteurs formant le bobinage du rotor. A cet effet, le rotor comprenant un noyau formé de tôles feuilletées présente des encoches longitudinales séparées par des dents, les conducteurs étant enfilés à l'intérieur de ces encoches.

La machine comporte également au moins deux balais réalisés en matériau électriquement conducteur agencés à l'intérieur de porte-balais pour permettre l'alimentation électrique du rotor par commutation du courant électrique dans les conducteurs du rotor.

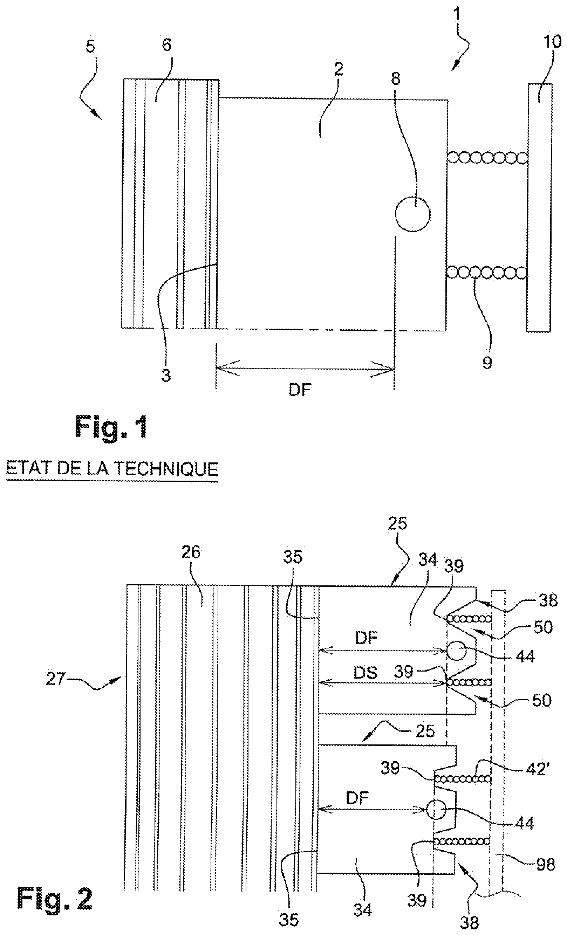

A cet effet, comme montré sur la figure 1, chaque balai 1 comporte un corps 2 ayant une face avant 3 destinée à venir frotter contre un collecteur 5 à lames conductrices 6 reliées au bobinage du rotor, ces lames 6 étant séparées par des interstices garnis d'un isolant. Chaque balai 1 comporte également une zone 8 de fixation avec une extrémité d'un élément électriquement conducteur appelé tresse. Une tresse assure l'alimentation électrique d'un des balais; tandis que l'autre tresse assure un retour à la masse de l'autre balai via un carter métallique du démarreur.

Un ressort 9, ici en appui contre un capot 10 du démarreur, exerce sur le corps 2 de chaque balai 1 un effort en direction du collecteur5 pour assurer le contact entre le balai 1 et les lames 6 du collecteur 5.

On définit une distance fonctionnelle DF du balai 1 correspondant à la zone d'usure du balai 1. Cette distance DF correspond à la distance la plus courte entre la face avant 3 et l'extrémité de la zone 8 de fixation de la tresse la plus proche de ladite face avant. Le nombre de cycles de fonctionnement des démarreurs utilisés avec les systèmes de type "stop and start" étant très élevé, il existe le besoin de maximiser cette distance fonctionnelle afin augmenter la durée de vie des balais.

Le document US6031313 décrit un dispositif porte balai comprenant un ressort de torsion dont son extrémité est en appuie contre une surface inclinée du balai.

US2008/084132 concerne un porte balai pour moteur dynamoélectrique tel qu'un démarreur cf. paragraphe [0022]. Le document US2003/230951 décrit un ensemble comprenant un balai comprenant une surface d'appuie de ressort définissant une face arqué. par rapport à un axe du balai et un ressort, le ressort qui exerce une force sur la face arquée.

### OBJET DE L'INVENTION

L'invention vise à répondre à ce besoin.

*A cet effet, l'invention a pour objet un* Balai et un porte-balais pour machine électrique selon la revendication 1.

. *Les deux surfaces d'appui permettent d'équilibrer sur le balai les forces du ressort sur le balai et donc de faciliter le coulissement du balai dans la cage ainsi que la pression.*

Le fait que la zone de fixation se situe entre les deux surfaces d'appui permet de mieux répartir le courant.

Le fait que la zone de fixation de la tresse de connexion est située au moins en partie entre un plan passant par la face d'appuie et l'extrémité de la face latérale la plus éloignée de la face avant permet de monter une tresse qui ne délimite pas la distance fonctionnelle du balai. Ainsi, le balai peut avoir une durée de vie plus longue.

Selon une réalisation, la face latérale sur laquel-le la zone de fixation est située comporte une hauteur correspondant à la longueur entre la face avant et la face arrière et une largeur correspondant à la longueur entre les deux faces latérales contiguës.
Selon une réalisation, la zone de fixation de la tresse est située au milieu de la largeur de la face latérale. Cela permet de répartir le courant sur toute la face avant du balai et donc d'augmenter la durée de vie du balai ainsi que le rendement du balai.

Selon une réalisation, une distance entre la surface d'appui et la face avant du balai est égale à une distance fonctionnelle du balai correspondant à la distance la plus courte entre ladite face avant et l'extrémité de la zone de fixation la plus proche de la face avant. Cela permet de maximiser la distance fonctionnelle du balai et donc sa durée de vie.

Selon une réalisation, le corps du balai comporte deux surfaces d'appui. Les deux surfaces d'appui permettent d'équilibrer sur le balai les forces du ressort sur le balai et donc de faciliter le coulissement du balai dans la cage ainsi que la pression. Selon ce mode de réalisation, la zone de fixation de la tresse se situant entre les deux surfaces d'appui. Cela permet de mieux répartir le courant.

Selon une réalisation, la zone de fixation est positionnée sur une protubérance délimitée par des évidements dont le fond forme les surfaces d'appui.

Selon une réalisation, les évidements présentent une forme en V.

Selon une réalisation, la cage à balai comprend des parois latérales comportant des ouvertures pour permettre le passage de la tresse lors du déplacement du balai. Cela permet au balai d'éviter que la tresse agisse de butée et d'empêcher le balai de coulisser.

Selon une réalisation, la cage à balai comporte également deux volets situés du côté de la face avant du balai. Cela permet d'avoir une cage à balai qui permet de s'adapter sur des portes balais dont les tresses viennent d'un côté ou de l'autre côté.

Selon une réalisation, la cage à balai comporte une échancrure ménagée dans les parois latérales dans le prolongement des ouvertures et dans les volets pour permettre un déplacement de la tresse le plus proche possible du collecteur. Cela permet d'empêcher que la tresse ne viennent en buté contre la cage à balai.

Selon une réalisation, le ressort est à spirales, le ressort présentant deux bras et une extrémité pliée en forme de U et deux ensembles de spires issus chacun d'une des tiges du U en regard l'une de l'autre, chaque ensemble de spires se terminant par un bras ayant un retour destiné à venir en appui contre une surface d'appui du balai. Cela permet de diminuer le diamètre du porte balai en positionnant le ressort au dessus ou en dessous de la cage à balai, et de donner une redondance des appuis du ressort sur le balai. Ainsi en cas d'un corps étranger bloquant une des deux spires ou tiges, ou en cas de casse d'une spire ou tige, l'autre tige et spire peuvent continuer à déplacer le balai en exerçant une pression sur celui-ci.

Selon une réalisation, le ressort est à spirales est maintenu sur le corps par un système de maintien comportant trois dents, une des dents située entre les deux autres dents étant positionnée dans un plan décalé par rapport au plan dans lequel se situe les deux autres dents, l'extrémité en forme de U du ressort étant positionnée entre des dents du système de maintien.

Selon une réalisation, le ressort comporte une partie enroulée formée par une pluralité de spires sensiblement concentriques d'un ruban plat enroulé sur lui-même, la partie enroulée se terminant par une extrémité plate prolongée par deux bras parallèles entre eux destinés à venir en appui contre les surfaces d'appui de la face arrière du balai.

Selon une réalisation, chaque bras comporte une première portion droite s'étendant dans le plan de l'extrémité plate du ressort et une deuxième portion droite s'étendant dans une direction éloignée de la partie enroulée, la deuxième portion droite étant reliée à la première portion droite par l'intermédiaire d'une première portion pliée de forme arrondie, cette deuxième portion droite étant également reliée à une troisième portion droite par l'intermédiaire d'une deuxième portion pliée de forme arrondie.

Selon une réalisation, le ressort à spirales est maintenu sur le corps par un système de maintien formé par un pion de section sensiblement rectangulaire autour duquel est positionné la partie enroulée du ressort à spirales.

Selon une réalisation, dans lequel les bras du ressort à spirale peuvent se déplacer selon un angle alpha entre sa position en début de vie du ressort et la position en fin de vie du balai, et en ce que la bissectrice de l'angle alpha est perpendiculaire au balai. Cela permet de minimiser les frottements entre le ressort et la surface d'appui.

Par perpendiculaire on entend perpendiculaire à 1° prés.

Selon une réalisation, le ressort à spirale est monté de sorte que le point d'appuie du ressort à spirale sur la surface d'appuie est le même en début de vie du balai que en fin de vie.

Par même point on entend à plus ou moins 1 mm.

Cela permet d'améliorer le guidage du balai dans la cage à balai.

Selon un mode de réalisation, la face arrière du balai non usée se situe à une distance de l'ordre de 4mm d'une périphérie externe du corps du porte-balais et une périphérie externe d'une partie enroulée du ressort se situe à une distance de l'ordre de 2.5mm par rapport à la périphérie externe du corps du porte-balais.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, montre une vue de dessus d'un balai selon l'état de la technique;
La figure 2 montre une vue de dessus de deux balais selon l'invention ayant des distances fonctionnelles différentes;
Les figures 3a à 3c montrent respectivement des vues en perspective, de dessus et de côté, d'un premier mode de réalisation d'un porte-balais selon l'invention ;
Les figures 4a et 4b montrent des vues en perspective et de dessus d'un deuxième mode de réalisation d'un porte-balais selon l'invention;
Les figures 5a et 5b montrent des vues en perspective et de dessus du deuxième mode de réalisation du porte-balais selon l'invention lorsque le balai est usé;
La figure 6 montre une vue en détails du ressort à spirales utilisé dans le deuxième mode de réalisation du porte-balais selon l'invention;
Les figures 7a et 7b montrent deux représentations schématiques de deux configurations du porte-balais selon l'invention faisant apparaître un déplacement différent de la zone de contact entre le ressort et le balai.

Les éléments identiques similaires ou analogues conservent les mêmes références d'une figure à l'autre.

### DESCRIPTION D'EXEMPLES DE REALISATION DE L'INVENTION

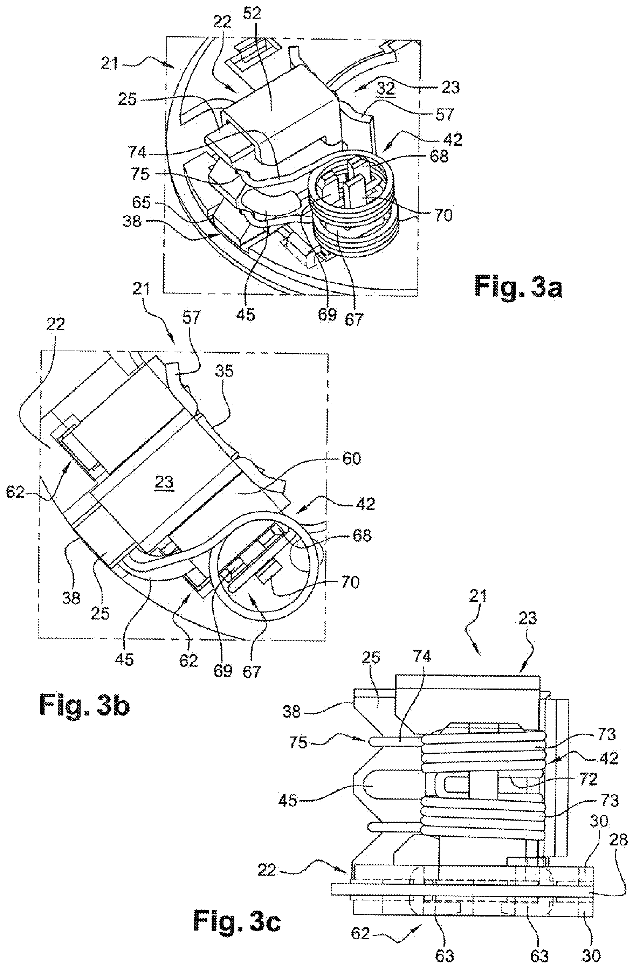

Les figures 3a à 3c, 4a, 4b et 5a et 5b montrent un porte-balais 21 selon l'invention comportant un corps 22 et au moins deux cages à balais 23 fixées sur le corps 22 servant chacun de logement à un balai 25. Sur les figures qui correspondent à des vues partielles, une seule cage à balai 23 est visible. Chaque balai 25 est monté à coulissement axial à l'intérieur de la cage à balai 23 afin de coopérer avec un collecteur 27 d'un rotor de machine électrique visible sur la figure 2. A cet effet, un ressort 42 à spirales muni de bras a tendance à pousser les balais 25 vers des lames de contact 26 du collecteur 27 portées par un corps du collecteur en matière électriquement isolante, telle que de la matière plastique. La machine électrique est par exemple la machine d'un démarreur d'un véhicule automobile. Alternativement, la machine électrique pourra également prendre la forme d'un alternateur.

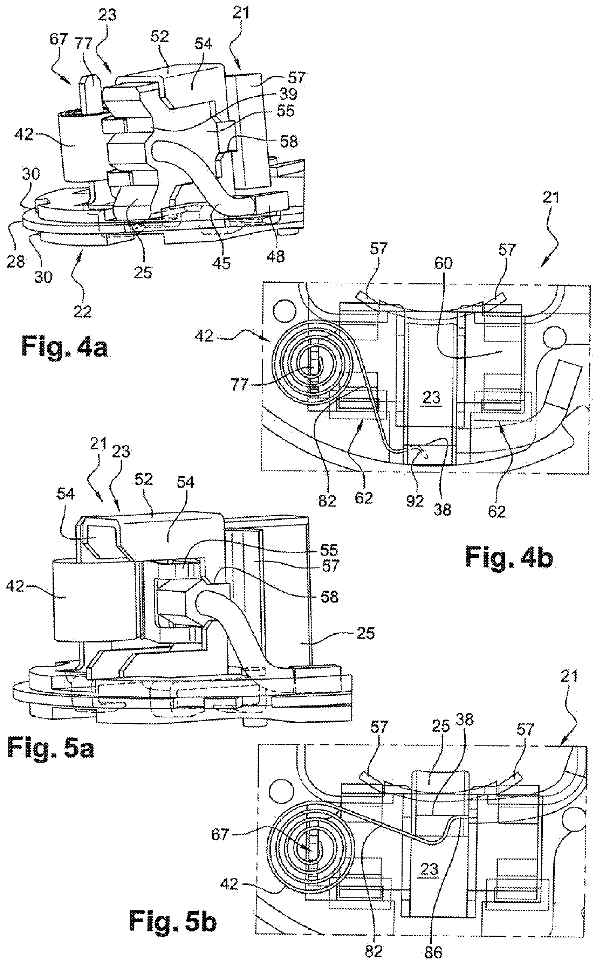

Plus précisément, comme cela est bien visible sur les figures 3c et 4a, le corps 22 du porte-balais comporte une platine 28 réalisée dans un matériau électriquement conducteur et deux parties 30 réalisées en matériau isolant plaquées de part et d'autre de la platine 28. Ce corps 22 présente une ouverture centrale 32 traversée par l'arbre du rotor. Le corps 22 comporte des ouvertures pour sa fixation par exemple à l'aide de vis (non représentées) sur un capot du démarreur.

Par ailleurs, chaque balai 25 montré en détails sur la figure 2 comporte un corps 34 de forme sensiblement parallélépipédique ayant une face 35, dite face avant, destinée à frotter contre le collecteur 27. Une face arrière 38 opposée à la face avant 35 comporte deux surfaces d'appui 39 pour un ressort 42 destiné à exercer un effort sur le corps 34 en direction du collecteur 27. Plus précisément, comme décrit ci-après, le ressort 42 est un ressort à spirales muni de bras 74 ou 82 destinés à venir en contact avec les surfaces d'appui 39 du balai 25.

Le corps 22 comporte également une zone 44 de fixation avec une extrémité d'un élément électriquement conducteur appelé tresse de connexion 45. La zone 44 de fixation de la tresse 45 se situe entre les deux surfaces d'appui 39 sur une face latérale du corps 34 perpendiculaire aux faces avant 35 et arrière 38. Les deux surfaces d'appui 39 correspondent à des fonds d'évidements 50 ménagés de part et d'autre de la zone 44 de fixation. La zone 44 de fixation est ainsi positionnée sur une protubérance délimitée par les évidements 50 qui présentent sur la figure une forme en V pour faciliter le guidage des bras du ressort 42.

Pour le balai 25 représenté en bas de la figure 2, la zone 44 de fixation de la tresse 45 est située en partie derrière les surfaces d'appui 39, du côté opposé à la face avant 35 du balai 25. Autrement dit, si on délimite en vue de dessus la surface de la face du balai 25 portant la zone 44 de connexion en deux espaces séparés par la droite passant par les surfaces d'appui 39, au moins une partie de la zone 44 de connexion se trouve du côté de l'espace situé du côté de la face arrière 38.

Pour le balai 25 représenté en haut de la figure 2, la zone 44 de fixation de la tresse 45 est située complètement derrière les surfaces d'appui 39. Dans ce cas, la plus petite distance DS entre les surfaces d'appui 39 et la face avant 35 du balai 25 est égale à la distance DF fonctionnelle du balai 25. Cette distance DF correspond à la plus petite distance entre la face avant 35 et l'extrémité de la zone 44 de fixation la plus proche de la face avant 35.

Dans ces deux modes de réalisations, la zone de fixation est située sur une face latérale située entre la face avant et la face arrière. La zone de fixation de la tresse de connexion est située au moins en partie entre un plan passant par la face d'appui et l'extrémité de la face latérale la plus éloignée de la face avant entre les deux surfaces d'appui.
la face latérale sur laquelle la zone de fixation est située comporte une hauteur correspondant à la longueur entre la face avant et la face arrière et une largeur correspondant à la longueur entre les deux faces latérales contiguës.

Dans le mode de réalisation de la figure 2 du balai situé en haut, la zone de fixation est située dans le sens de la longueur de la face latérale entre les deux zones d'appuis et dans le sens de la hauteur entre la face arrière et les surface d'appuis.

On note qu'une telle configuration du balai 25 permet d'augmenter la distance fonctionnelle DF par rapport celle du balai de l'état de l'art montré sur la figure 1 et donc d'augmenter la durée de vie du balai 25.

Dans le mode de réalisation de la figure 2 du balai situé en bas, la zone de fixation est située dans le sens de la longueur de la face latérale entre les deux zones d'appuis et dans le sens de la hauteur au niveau des surfaces d'appuis. Par niveau on entend que la zone de fixation de la tresse comporte une partie plus proche de face avant et une autre partie plus de la face arrière que les surfaces de d'appui.

Une telle configuration permet toujours d'augmenter la distance fonctionnelle DF que celle de l'art antérieure. De plus cela permet d'avoir moins de résistance électrique du balai entre la face avant et la face arrière que dans le mode de réalisation de la figure 3.

Dans les deux modes de réalisation la zone de fixation de la tresse est située au milieu (au centre) de la largeur de la face latérale. Cela permet de répartir le courant sur toute la face avant du balai et donc d'augmenter la durée de vie du balai ainsi que le rendement du balai. Il est très important de garder la tresse au centre du balai pour éviter d'avoir

La tresse 45 d'un des balais 25 relie électriquement ce balai 25 au capot ici via une cosse 48 métallique fixée sur la platine 28 du corps 22 du porte-balai (cf. figure 4a). A cet effet, la tresse 45 est avantageusement en cuivre ou en alliage de cuivre pour faciliter le soudage sur la cosse 48. Cette tresse assure ainsi un retour à la masse via le carter métallique du démarreur. Une autre tresse 45 en cuivre, solidaire de l'autre balai (non représenté), relie électriquement cet autre balai 25 à une alimentation électrique, le cas échéant via une borne du contacteur du démarreur.

Comme cela est bien visible sur les figures 4a et 5a, les cages à balai 23 prennent la forme d'un cadre ouvert du côté avant et du côté arrière du balai 25. Ce cadre est délimité par une paroi 52 supérieure éloignée du corps 22 et deux parois latérales 54 perpendiculaires à la paroi 52. Ces parois latérales 54 comportent des ouvertures 55 pour permettre le passage des bras du ressort 42 réalisé à spirales ainsi que de la tresse 45. Chaque cage à balai 23 comporte également deux volets 57 situés de part et d'autre de la face avant de la cage à balai 23. Ces volets 57 présentent une forme suivant la périphérie extérieure du collecteur 27.

Pour maximiser la longueur d'utilisation du balai, une échancrure 58 est réalisée de préférence dans les parois latérales 54 dans le prolongement des ouvertures 55 jusque dans la face avant de la cage à balai et dans les volets 57 pour permettre un déplacement des tresses 45 le plus proche possible du collecteur 27. Dans ce cas, les volets 57 assurent la liaison entre une partie supérieure de guidage du balai formée par la paroi su-périeure 52 et des portions des parois latérales 54 situées au-dessus des ouverture 55 et une partie inférieure de guidage du balai formée par les portions des parois latérales 54 situées en dessous des ouvertures 55 reliée à un support 60.

Comme visible sur les figures 3b et 4b, le support 60 s'étend de part et d'autre des faces latérales 54. Ce support 60 comporte de chaque côté un système 62 de fixation de la cage à balai 23 sur le corps 22 du porte-balais 21. Comme cela est montré sur la figure 3c, chaque système 62 de fixation est formé par des branches 63 issues des bords avant et arrière du support 60. Ces branches 63 traversent le corps 22 suivant son épaisseur et sont rabattues l'une vers l'autre à leur extrémité contre la platine 28 du corps. Une fois la cage à balai 23 montée sur le corps 22 du porte-balais via les systèmes de fixation 62, le guidage en translation du balai 25 est assuré par les parois latérales 54 et la paroi supérieure 52 de la cage à balai ainsi que par la face du corps 22 sur laquelle repose le balai 25. En l'occurrence, comme cela est visible sur la figure 3a, le balai 25 repose contre le fond d'une rainure 65 ménagée dans la face supérieure du corps 22.

Le support 60 porte un système 67 de maintien du ressort à spirales 42 sur un de ses côtés. Selon le mode de réalisation des figures 3a à 3c, le système 67 de maintien est formé par trois dents 68-70 entre lesquelles est maintenue une extrémité du ressort 42 décrit plus en détails ci-après. Deux dents 68, 69 se situent dans un même plan tandis que la troisième dent 70 est située entre les deux premières dents 68, 69. En outre, la dent 70 est en surélévation par rapport aux dents 68 et 69, c'est-à-dire qu'elle se situe dans un plan décalé par rapport aux deux dents 68 et 69.

Dans ce mode de réalisation, le ressort 42 à spirales est formé à partir d'un fil métallique de faible diamètre. Comme cela est montré sur la figure 3c, le ressort 42 présente une extrémité 72 pliée en forme de U positionnée entre les dents 68-70 du système 67 de maintien et deux ensembles 73 de spires issus chacun d'une des tiges du U en regard l'une de l'autre. Chaque ensemble 73 de spires se termine par un bras 74 ayant un retour 75 visible sur la figure 3a destiné à venir en appui contre une surface d'appui 39 du balai 25.

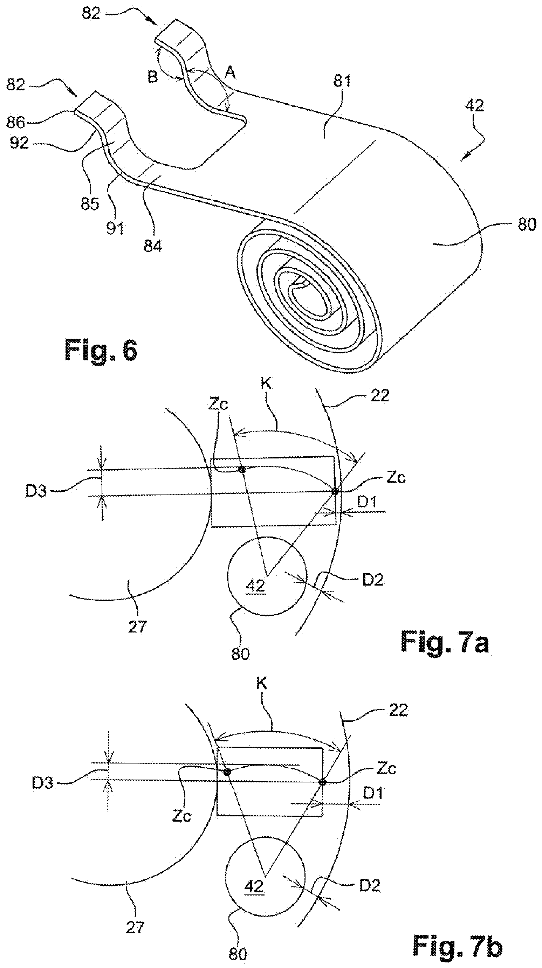

Dans un autre mode de réalisation montré sur les figures 4 et 5, le système 67 de maintien est formé par un pion 77 de section sensiblement rectangulaire autour duquel est positionné le ressort 42 montré en détails sur la figure 6. Ce ressort 42 comporte une partie enroulée 80 formée par une pluralité de spires sensiblement concentriques d'un ruban plat enroulé sur lui-même. La partie enroulée 80 se termine par une extrémité plate 81 de ruban. Cette extrémité plate 81 est prolongée par deux bras 82 parallèles entre eux destinés à venir en appui contre les surfaces d'appui 39 de la face arrière du balai. Ces bras 82 se situent chacun dans un prolongement d'un des bords de l'extrémité plate 81.

Chaque bras 82 comporte une première portion droite 84 s'étendant dans le plan de l'extrémité plate 81 du ressort et une deuxième portion droite 85 s'étendant dans une direction éloignée de la partie enroulée 80. La portion droite 85 est reliée à la portion 84 par l'intermédiaire d'une portion 91 pliée de forme arrondie. Cette portion droite 85 est également reliée à une troisième portion droite 86 par l'intermédiaire d'une deuxième portion 92 pliée de forme arrondie.

Suivant une réalisation, la portion droite 84 forme avec la portion droite 85 un angle A de l'ordre de 90 degrés; tandis que la portion droite 86 forme avec la portion droite 85 un angle B de l'ordre de 135 degrés.

Une telle configuration des bras 82 permet de garantir une bonne surface d'appui des bras 82 du ressort contre la face arrière 38 du balai 25 quel que soit l'état d'usure du balai 25. En effet, comme cela est bien visible sur la figure 4b, lorsque le balai 25 n'est pas encore usé, la portion pliée 92 assure le contact des bras 82 du ressort 42 contre la face arrière 38 du balai 25. Lorsque le balai 25 est usé et que les bras 82 se sont déplacés en rotation (cf. figure 5b), la portion droite 86 assure le contact des bras 82 du ressort 42 contre la face arrière 38 du balai 25.

Pour réaliser les bras 82, on retire une portion de matière de forme rectangulaire de l'extrémité plate du ruban de manière à obtenir des portions droites parallèles entre elles formant avec l'extrémité du ruban une forme en U. Ces portions sont ensuite pliées suivant la forme de bras 82 souhaitée.

Lors du montage, la partie enroulée 80 du ressort 42 est positionnée autour du pion 77 de sorte que la première spire de l'enroulement prend appui contre des faces latérales du pion 77. Le ressort 42 ainsi maintenu, les bras 82 du ressort sont déplacés en rotation pour être positionnés contre les surfaces d'appui 39 du balai 25 installé à l'intérieur de sa cage à balai appelé aussi la cage à balai 23. Un tel déplacement des bras 82 a tendance à déformer la partie enroulée 80, de sorte que les bras 82 en appui contre la face arrière 38 du balai 25 poussent le balai 25 en direction du collecteur 27.

Comme visible sur les figures 7a et 7b, le ressort 42 à spirales qui présente un débattement angulaire donné K, par exemple de l'ordre de 50 degrés, va engendrer un déplacement variable de la zone de contact d'un bras 82 du ressort 42 contre la face arrière 38 du balai 25 en fonction de la configuration de l'ensemble porte-balais. On rappelle ici que le débattement angulaire K du ressort 42 correspond à l'angle séparant les deux positions angulaires extrêmes des bras 82 du ressort.

Dans la première configuration montrée sur la figure 7a, la face arrière 38 du balai non usé se situe à une distance D1 de l'ordre de 1 mm de la périphérie externe du corps 22 du porte-balais. La périphérie externe de la partie enroulée 80 du ressort 42 se situe à une distance D2 de l'ordre de 2.5mm par rapport à la périphérie externe du corps 22 du porte-balais. Les distances D1, D2 entre deux éléments sont mesurées au niveau du plus petit écart séparant ces deux éléments. Dans ce cas, la zone de contact Zc se déplace suivant une distance D3 de l'ordre de 4mm mesurée dans un plan radial suivant un axe perpendiculaire au sens de déplacement axial du balai 25.

Dans la deuxième configuration montrée sur la figure 7b, la face arrière du balai 25 non usé se situe à une distance D1 de l'ordre de 4mm de la périphérie externe du corps 22 du porte-balais. Comme précédemment, la périphérie externe de la partie enroulée 80 du ressort 42 se situe à une distance D2 de l'ordre de 2.5mm par rapport à la périphérie externe du corps 22 du porte-balais. Dans ce cas, la zone de contact Zc se déplace suivant une distance D3 de l'ordre de 2.5mm mesurée suivant un axe perpendiculaire au sens de déplacement axial du balai 25.

On préfère ainsi la deuxième configuration qui limite le déplacement de la zone de contact Zc tout en permettant d'optimiser la longueur d'usure du balai 25 pour un même débattement du ressort 42 que dans la première configuration. Cela est valable pour les deux modes de réalisation de l'invention précédemment décrits.

Selon un exemple non représenté, les bras du ressort à spirale peuvent se déplacer selon un angle alpha entre sa position en début de vie du ressort et la position en fin de vie du balai, et en ce que la bissectrice de l'angle alpha est perpendiculaire au balai. Cela permet de minimiser les frottements entre le ressort et la surface d'appui.

Par perpendiculaire on entend perpendiculaire à 1° prés.

Selon une réalisation, le ressort à spirale est monté de sorte que le point d'appuie du ressort à spirale sur la surface d'appuie et le même en début de vie du balai que en fin de vie.

Cela permet d'améliorer le guidage du balai dans la cage à balai.

L'homme du métier pourra bien entendu modifier les configurations du balai 25 et du porte-balais 21 présentées dans les figures sans sortir du cadre de l'invention. Comme cela est montré sur la figure 2, le ressort 42 à spirales peut être remplacé par un ressort cylindrique 42' prenant appui sur un capot 98 pour pousser le balai 21 contre les lames de contact du collecteur 27.

Le balai et porte balai peuvent aussi être utilisé pour une autre machine électrique tel que les alternateur de véhicule.

Il est également évident que certaines caractéristiques présentées dans un mode de réalisation particulier pourraient être transposées dans un autre mode de réalisation.

## Revendications

1. Balai (25) et porte-balais (21) pour machine électrique,
le balai (25), comportant :
- un corps (34) ayant une face, dite face avant (35), destinée à frotter contre un collecteur (27) d'un rotor de machine électrique et une face, dite face arrière (38), opposée à la face avant comportant au moins une surface d'appui (39) pour un ressort (42, 42'), ce dernier exerçant un effort sur le balai en direction du collecteur (27), et
- une zone (44) de fixation d'une tresse (45) de connexion au corps (34) du balai, situé sur une face latérale du balai formant au moins en partie une périphérie du corps du balai reliant la face avant à la face arrière, la zone (44) de fixation de la tresse (45) de connexion est située au moins en partie entre un plan passant par la face d'appui et l'extrémité de la face latérale la plus éloignée de la face avant, le corps comportant deux surfaces d'appui (39), la zone (44) de fixation de la tresse (45) se situant entre les deux surfaces d'appui (39), et
le porte-balais (21) comportant :
- un corps (22),
- au moins une cage à balai (23) fixée sur ledit corps (22) et recevant le balai (25), et
- ledit ressort (42, 42'), ce ressort (42, 42') venant en contact sur les deux surfaces d'appui (39) du balai et exerçant ledit effort pour pousser le balai (25) vers le collecteur.

2. Balai (25) et porte-balais (21) selon la revendication 1, **caractérisés en ce qu'**une distance (DS) entre la surface d'appui (39) et la face avant (35) du balai est égale à une distance fonctionnelle (DF) du balai correspondant à la distance la plus courte entre ladite face avant (35) et l'extrémité de la zone (44) de fixation la plus proche de la face avant (35).

3. Balai (25) et porte-balais (21) selon la revendication 2, **caractérisés en ce que** la zone (44) de fixation est positionnée sur une protubérance délimitée par des évidements (50) dont le fond forme les surfaces d'appui (39).

4. Balai (25) et porte-balais (21) selon la revendication 3, **caractérisés en ce que** les évidements (50) présentent une forme en V.

5. Balai (25) et porte-balais (21) selon l'une des revendications 1 à 4, **caractérisés en ce que** la cage à balai (23) comprend des parois latérales (54) comportant des ouvertures (55) pour permettre le passage de la tresse (45) lors du déplacement du balai (25).

6. Balai (25) et porte-balais (21) selon la revendication 5, **caractérisés en ce que** la cage à balai (23) comporte également deux volets (57) situés du côté de la face avant (35) du balai (25).

7. Balai (25) et porte-balais (21) selon la revendication 6, **caractérisés en ce que** le porte balai comporte une échancrure (58) ménagée dans les parois latérales dans le prolongement des ouvertures (55) et dans les volets (57) pour permettre un déplacement de la tresse (45) le plus proche possible du collecteur (27).

8. Balai (25) et porte-balais (21 selon l'une des revendications précédentes, **caractérisés en ce que** le ressort (42) est à spirales, le ressort présentant une extrémité (72) pliée en forme de U et deux ensembles (73) de spires issus chacun d'une des tiges du U en regard l'une de l'autre, chaque ensemble (73) de spires se terminant par un bras (74) ayant un retour (75) destiné à venir en appui contre une surface d'appui (39) du balai.

9. Balai (25) et porte-balais (21) selon la revendication 8, **caractérisés en ce que** le ressort (42) à spirales est maintenu sur le corps (22) par un système (67) de maintien comportant trois dents (68-70), une des dents (70) située entre les deux autres dents (68, 69) étant positionnée dans un plan décalé par rapport au plan dans lequel se situe les deux autres dents (68, 69), l'extrémité en forme de U du ressort (42) étant positionnée entre des dents (68-70) du système (67) de maintien.

10. Balai (25) et porte-balais (21) selon l'une des revendications 1 à 7, **caractérisés en ce que** le ressort (42) est à spirales, le ressort comportant une partie enroulée (80) formée par une pluralité de spires sensiblement concentriques d'un ruban plat enroulé sur lui-même, la partie enroulée (80) se terminant par une extrémité plate (81) prolongée par deux bras (82) parallèles entre eux destinés à venir en appui contre les surfaces d'appui (39) de la face arrière (38) du balai.

11. Balai (25) et porte-balais (21) selon la revendication 10, **caractérisés en ce que** chaque bras (82) comporte une première portion droite (84) s'étendant dans le plan de l'extrémité plate (81) du ressort (42) et une deuxième portion droite (85) s'étendant dans une direction éloignée de la partie enroulée (80), la deuxième portion droite (85) étant reliée à la première portion droite (84) par l'intermédiaire d'une première portion (91) pliée de forme arrondie, cette deuxième portion droite (85) étant également reliée à une troisième portion droite (86) par l'intermédiaire d'une deuxième portion (92) pliée de forme arrondie.

12. Balai (25) et porte balais (21) selon la revendication 10 ou 11, **caractérisés en ce que** le ressort à spirales est maintenu sur le corps (22) par un système (67) de maintien formé par un pion (77) de section sensiblement rectangulaire autour duquel est positionné la partie enroulée du ressort (42) à spirales.

13. Balai (25) et porte-balais selon l'une des revendications précédentes, dans lequel les bras du ressort (42) à spirale peuvent se déplacer selon un angle alpha entre sa position en début de vie du balai (25) et la position en fin de vie du balai (25), et en ce que la bissectrice de l'angle alpha est perpendiculaire à une face latérale du balai (25).

## Patentansprüche

1. Bürste (25) und Bürstenhalter (21) für eine elektrische Maschine,
wobei die Bürste (25) umfasst:
- einen Körper (34) mit einer Seite, Vorderseite (35) genannt, die dazu bestimmt ist, an einem Kollektor (27) eines Rotors einer elektrischen Maschine zu reiben, und eine Seite, Rückseite (38) genannt, die zur Vorderseite entgegengesetzt ist und mindestens eine Stützfläche (39) für eine Feder (42, 42') umfasst, wobei Letztere eine Kraft auf die Bürste in Richtung des Kollektors (27) ausübt, und
- eine Zone (44) zur Befestigung einer Anschlusslitze (45) an den Körper (34) der Bürste, die sich auf einer Seitenfläche der Bürste befindet, die zumindest teilweise eine Peripherie des Körpers der Bürste bildet, die die Vorderseite mit der Rückseite verbindet, wobei die Zone (44) zur Befestigung der Anschlusslitze (45) zumindest teilweise zwischen einer durch die Stützfläche verlaufenden Ebene und dem Ende der Seitenfläche, das am weitesten von der Vorderseite entfernt ist, angeordnet ist,
wobei der Körper zwei Stützflächen (39) umfasst, wobei sich die Zone (44) zur Befestigung der Litze (45) zwischen den beiden Stützflächen (39) befindet, und
wobei der Bürstenhalter (21) umfasst:
- einen Körper (22),
- mindestens ein Bürstengehäuse (23), das auf dem Körper (22) befestigt ist und die Bürste (25) aufnimmt, und
- die vorbezeichnete Feder (42, 42'), wobei diese Feder (42, 42') mit den beiden Stützflächen (39) der Bürste in Kontakt kommt und die vorbezeichnete Kraft ausübt, um die Bürste (25) in Richtung des Kollektors zu schieben.

2. Bürste (25) und Bürstenhalter (21) nach Anspruch 1, **dadurch gekennzeichnet, dass** ein Abstand (DS) zwischen der Stützfläche (39) und der Vorderseite (35) der Bürste gleich einem Funktionsabstand (DF) der Bürste entsprechend dem kürzesten Abstand zwischen der Vorderseite (35) und dem Ende der der Vorderseite (35) am nächsten liegenden Befestigungszone (44) ist.

3. Bürste (25) und Bürstenhalter (21) nach Anspruch 2, **dadurch gekennzeichnet, dass** die Befestigungszone (44) auf einer Auskragung positioniert ist, die von Ausnehmungen (50) begrenzt ist, deren Boden die Stützflächen (39) bildet.

4. Bürste (25) und Bürstenhalter (21) nach Anspruch 3, **dadurch gekennzeichnet, dass** die Ausnehmungen (50) eine V-Form aufweisen.

5. Bürste (25) und Bürstenhalter (21) nach einem der Ansprüche 1 bis 4, **dadurch gekennzeichnet, dass** das Bürstengehäuse (23) Seitenwände (54) aufweist, umfassend Öffnungen (55), um den Durchgang der Litze (45) bei der Verschiebung der Bürste (25) zu ermöglichen.

6. Bürste (25) und Bürstenhalter (21) nach Anspruch 5, **dadurch gekennzeichnet, dass** das Bürstengehäuse (23) auch zwei Klappen (57) umfasst, die sich auf der Seite der Vorderseite (35) der Bürste (25) befinden.

7. Bürste (25) und Bürstenhalter (21) nach Anspruch 6, **dadurch gekennzeichnet, dass** der Bürstenhalter einen Ausschnitt (58) umfasst, der in den Seitenwänden in der Verlängerung der Öffnungen (55) und in den Klappen (57) ausgenommen ist, um eine Verschiebung der Litze (45) möglichst nahe zum Kollektor (27) zu ermöglichen.

8. Bürste (25) und Bürstenhalter (21) nach einem der vorhergehenden Ansprüche, **dadurch gekennzeichnet, dass** die Feder (42) eine Spiralfeder ist, wobei die Feder ein U-förmig gebogenes Ende (72) und zwei Windungseinheiten (73), die sich jeweils aus einem der einander gegenüberliegenden Schenkel des U ergeben, aufweist, wobei jede Windungseinheit (73) mit einem Arm (74) endet, der eine Rückführung (75) aufweist, die dazu bestimmt ist, an einer Stützfläche (39) der Bürste zur Anlage zu gelangen.

9. Bürste (25) und Bürstenhalter (21) nach Anspruch 8, **dadurch gekennzeichnet, dass** die Spiralfeder (42) auf dem Körper (22) durch ein Haltesystem (67) gehalten wird, umfassend drei Zähne (68-70), wobei einer der Zähne (70), der zwischen den beiden anderen Zähnen (68, 69) angeordnet ist, in einer Ebene positioniert ist, die zu der Ebene, in der sich die beiden anderen Zähne (68, 69) befinden, versetzt ist, wobei das U-förmige Ende der Feder (42) zwischen Zähnen (68-70) des Haltesystems (67) positioniert ist.

10. Bürste (25) und Bürstenhalter (21) nach einem der Ansprüche 1 bis 7, **dadurch gekennzeichnet, dass** die Feder (42) eine Spiralfeder ist, wobei die Feder einen gewickelten Teil (80) umfasst, der von einer Vielzahl von im Wesentlichen konzentrischen Windungen eines um sich selbst gewickelten Bandes gebildet ist, wobei der gewickelte Teil (80) mit einem flachen Ende (81) endet, das von zwei zueinander parallelen Armen (82) verlängert ist, die dazu bestimmt sind, an den Stützflächen (39) der Rückseite (38) der Bürste zur Anlage zu gelangen.

11. Bürste (25) und Bürstenhalter (21) nach Anspruch 10, **dadurch gekennzeichnet, dass** jeder Arm (82) einen ersten geraden Abschnitt (84), der sich in der Ebene des flachen Endes (81) der Feder (42) erstreckt, und einen zweiten geraden Abschnitt (85) umfasst, der sich in einer von dem gewickelten Teil (80) entfernten Richtung erstreckt, wobei der zweite gerade Abschnitt (85) mit dem ersten geraden Abschnitt (84) durch einen ersten gefalzten Abschnitt (91) von abgerundeter Form verbunden ist, wobei dieser zweite gerade Abschnitt (85) auch mit einem dritten geraden Abschnitt (86) durch einen zweiten gefalzten Abschnitt (92) von abgerundeter Form verbunden ist.

12. Bürste (25) und Bürstenhalter (21) nach Anspruch 10 oder 11, **dadurch gekennzeichnet, dass** die Spiralfeder auf dem Körper (22) durch ein Haltesystem (67) gehalten wird, das von einem Stift (77) mit einem im Wesentlichen rechteckigen Querschnitt, um den herum der gewickelte Teil der Spiralfeder (42) positioniert ist, gebildet ist.

13. Bürste (25) und Bürstenhalter nach einem der vorhergehenden Ansprüche, bei dem sich die Arme der Spiralfeder (42) entlang eines Winkels Alpha zwischen ihrer Position zu Beginn der Lebensdauer der Bürste (25) und der Position am Ende der Lebensdauer der Bürste (25) verschieben können, und **dadurch gekennzeichnet, dass** die Halbierende des Winkels Alpha senkrecht auf eine Seitenfläche der Bürste (25) ist.

## Claims

1. Brush (25) and brush holder (21) for an electrical machine,
the brush (25) including:
- a body (34) having a face, called a front face (35), for rubbing against a commutator (27) of an electric machine rotor and a face, called a rear face (38), opposite the front face including at least one bearing surface (39) for a spring (42, 42'), the latter exerting a force on the brush in the direction of the commutator (27), and
- a zone (44) for fixing a connecting braid (45) to the body (34) of the brush, located on a lateral face of the brush forming at least partially a periphery of the body of the brush connecting the front face to the rear face, the zone (44) for fixing the connecting braid (45) is located at least partly between a plane passing through the bearing face and the end of the lateral face furthest from the front face, the body including two bearing surfaces (39), the zone (44) for fixing the braid (45) being located between the two bearing surfaces (39), and
the brush holder (21) including:
- a body (22),
- at least one brush cage (23) fixed on said body (22) and receiving the brush (25), and
- said spring (42, 42'), this spring (42, 42') coming into contact with the two bearing surfaces (39) of the brush and exerting said force in order to push the brush (25) towards the commutator.

2. Brush (25) and brush holder (21) according to Claim 1, **characterized in that** a distance (DS) between the bearing surface (39) and the front face (35) of the brush is equal to a functional distance (DF) of the brush corresponding to the shortest distance between said front face (35) and the end of the fixing zone (44) closest to the front face (35).

3. Brush (25) and brush holder (21) according to Claim 2, **characterized in that** the fixing zone (44) is positioned on a protuberance defined by recesses (50), the bottom of which forms the bearing surfaces (39).

4. Brush (25) and brush holder (21) according to Claim 3, **characterized in that** the recesses (50) are V-shaped.

5. Brush (25) and brush holder (21) according to one of Claims 1 to 4, **characterized in that** the brush cage (23) comprises lateral walls (54) including openings (55) for allowing the braid (45) to pass when the brush (25) is moved.

6. Brush (25) and brush holder (21) according to Claim 5, **characterized in that** the brush cage (23) also includes two flaps (57) located on the side of the front face (35) of the brush (25).

7. Brush (25) and brush holder (21) according to Claim 6, **characterized in that** the brush holder includes a cut-out (58) provided in the lateral walls in the extension of the openings (55) and in the flaps (57) to allow the braid (45) to move as close as possible to the commutator (27).

8. Brush (25) and brush holder (21) according to one of the preceding claims, **characterized in that** the spring (42) has spirals, the spring having an end (72) bent into a U-shape and two sets (73) of turns each coming from one of the rods of the U opposite each other, each set (73) of turns terminating in an arm (74) having a return (75) for bearing against a bearing surface (39) of the brush.

9. Brush (25) and brush holder (21) according to Claim 8, **characterized in that** the spiral spring (42) is held on the body (22) by a holding system (67) including three teeth (68-70), one of the teeth (70) located between the other two teeth (68, 69) being positioned in a plane offset with respect to the plane in which the other two teeth (68, 69) are located, the U-shaped end of the spring (42) being positioned between teeth (68-70) of the holding system (67).

10. Brush (25) and brush holder (21) according to one of Claims 1 to 7, **characterized in that** the spring (42) has spirals, the spring including a wound part (80) formed by a plurality of substantially concentric turns of a flat ribbon wound on itself, the wound part (80) terminating in a flat end (81) extended by two mutually parallel arms (82) for bearing against the bearing surfaces (39) of the rear face (38) of the brush.

11. Brush (25) and brush holder (21) according to Claim 10, **characterized in that** each arm (82) includes a first straight portion (84) extending in the plane of the flat end (81) of the spring (42) and a second straight portion (85) extending in a direction away from the wound part (80), the second straight portion (85) being connected to the first straight portion (84) via a first rounded bent portion (91), this second straight portion (85) also being connected to a third straight portion (86) via a second rounded bent portion (92).

12. Brush (25) and brush holder (21) according to Claim 10 or 11, **characterized in that** the spiral spring is held on the body (22) by a holding system (67) formed by a slug (77) of substantially rectangular cross section about which the wound part of the spiral spring (42) is positioned.

13. Brush (25) and brush holder according to one of the preceding claims, wherein the arms of the spiral spring (42) can move along an angle alpha between the position thereof at the beginning of the brush (25) life and the position at the end of the brush (25) life, and in that the bisector of the angle alpha is perpendicular to a lateral face of the brush (25).
